# EUROPEAN PATENT APPLICATION

(11) **EP 3 128 711 A1**
(43) Date of publication of application: **08.02.2017**
(21) Application number: 14890070.7
(22) Date of filing: 23.04.2014
(51) Int. Cl.: H04L 29/06

(54) **INFORMATION OBJECT ACQUISITION METHOD, SERVER AND USER EQUIPMENT**

(71) Applicant: Huawei Technologies Co., Ltd., Shenzhen, Guangdong 518129 (CN)
(72) Inventor: XIONG, Chunshan, Shenzhen Guangdong 518129 (CN); WEI, Anni, Shenzhen Guangdong 518129 (CN)
(74) Representative: Gill Jennings & Every LLP
(86) International application number: PCT/CN2014/076027
(87) International publication number: WO 2015/161462

(57) **Abstract**

The present invention provides an information object obtaining method, a server, and user equipment, including: receiving, by a name resolution server NRS, an information object IO request message sent by the user equipment, where the IO request message carries an identifier of an IO; and sending, by the NRS according to the identifier of the IO, information about a node storing the IO and attribute information of the IO stored in the node to the user equipment. In technical solutions of the present invention, a name resolution server NRS receives an information object IO request message sent by user equipment, where the request message carries an identifier of an IO; the NRS sends, according to the identifier of the IO, information about a node storing the IO and attribute information of the IO stored in the node to the user equipment, so that the user equipment can request, according to the attribute information of the IO, the IO from a node that meets an attribute requirement of the user equipment, and a user requirement can be better met.

## Description

### TECHNICAL FIELD

The present invention relates to communications technologies, and in particular, to an information object obtaining method, a server, and user equipment.

### BACKGROUND

The Internet initially pursues network interconnection to implement sharing of hardware resources, which may reduce costs and improve efficiency by means of sharing. However, as technologies develop, the existing TCP/IP-based Internet gradually poses problems such as poor security, poor mobility, poor reliability, and low flexibility. To resolve these problems, information-centric networking (Information-Centric Networking, ICN for short) emerges.

The ICN changes the existing end-to-end communication mechanism of the Internet, separates content from a terminal position, and uses a publish/subscribe paradigm (Publish/Subscribe Paradigm) to provide services such as storing and multi-party communication. Proposal of the ICN turns attention of users from terminals to content, that is, the users do not need to care about where to obtain data they want, but only care about what content they want.

In the prior art, a subscriber sends an information object (Information Objects, IO for short) request to a name resolution server (Name Resolution Service, NRS for short). According to the request of the subscriber, the NRS returns information about ICN nodes that store requested IO. After receiving a reply, the subscriber selects one ICN node from the ICN nodes to request the IO, but the ICN node saves only a name identifier and content data of the IO. Consequently, the content data that is finally obtained by a user from the ICN node and corresponding to the IO request may not meet a user requirement. For example, when a subscriber needs a document with processing permission, a document returned from an ICN node may be a read-only file and cannot meet a user requirement.

### SUMMARY

Embodiments of the present invention provides an information object obtaining method, a server, and user equipment to resolve a problem that user equipment cannot obtain an information object that meets a requirement of the user equipment.

A first aspect of the present invention provides an information object IO obtaining method, including:
receiving, by a name resolution server NRS, an information object IO request message sent by user equipment, where the IO request message carries an identifier of an IO; and
sending, by the NRS according to the identifier of the IO, information about a node storing the IO and attribute information of the IO stored in the node to the user equipment.

In a first possible implementation manner of the first aspect, the attribute information includes at least one of the following: publisher information of the IO, publishing time of the IO, a validity period of the IO, processing permission of the IO, or a version of the IO.

With reference to the first aspect or the first possible implementation manner of the first aspect, in a second possible implementation manner of the first aspect, the sending, by the NRS, information about a node storing the IO and attribute information of the IO stored in the node to the user equipment specifically includes:
sending, by the NRS, an IO reply message to the user equipment, where the IO reply message carries metadata, and the metadata includes the information about the node for the IO and the stored attribute information of the IO.

A second aspect of the present invention provides an information object IO obtaining method, including:
sending, by user equipment, an information object IO request message to a name resolution server NRS, where the IO request message carries an identifier of an IO;
receiving, by the user equipment, information about a node storing the IO and attribute information of the IO stored in the node that are sent by the NRS; and
determining, by the user equipment, a target node according to the attribute information of the IO stored in the node and an attribute requirement of the user equipment, and requesting the target node for the IO.

In a first possible implementation manner of the second aspect, the attribute information includes at least one of the following: publisher information of the IO, publishing time of the IO, a validity period of the IO, processing permission of the IO, or a version of the IO.

With reference to the second aspect or the first possible implementation manner of the second aspect, in a second possible implementation manner of the second aspect, the receiving, by the user equipment, information about a node storing the IO and attribute information of the IO stored in the node that are sent by the NRS specifically includes:
receiving, by the user equipment, an IO reply message sent by the NRS, where the IO reply message carries metadata, and the metadata includes the information about the node for the IO and the stored attribute information of the IO.

A third aspect of the present invention provides an information object IO obtaining method, including:
sending, by user equipment, an information object IO request message to a first information-centric networking ICN node, where the IO request message carries an identifier of an IO and attribute requirement information of the user equipment; and
receiving, by the user equipment, an IO that matches the attribute requirement information, corresponds to the identifier of the IO, and is sent by the first ICN node.

In a first possible implementation manner of the third aspect, the attribute requirement information includes at least one of the following: publisher information of the IO, publishing time of the IO, a validity period of the IO, processing permission of the IO, or a version of the IO.

With reference to the third aspect or the first possible implementation manner of the third aspect, in a second possible implementation manner of the third aspect, the IO request message may be named by using a flat naming scheme or a hierarchical naming scheme.

A fourth aspect of the present invention provides an information object IO obtaining method, including:
receiving, by a second information-centric networking ICN node, an IO request message sent by a preceding node, where the IO request message carries an identifier of an IO and attribute requirement information of user equipment; and
if the second ICN node stores an IO corresponding to the identifier of the IO and an attribute of the IO matches the attribute requirement information, sending, by the second ICN node, the corresponding stored IO to the preceding node.

In a first possible implementation manner of the fourth aspect, the preceding node is the user equipment or an ICN node.

In a second possible implementation manner of the fourth aspect, the attribute requirement information includes at least one of the following: publisher information of the IO, publishing time of the IO, a validity period of the IO, processing permission of the IO, or a version of the IO.

In a third possible implementation manner of the fourth aspect, the IO request message may be named by using a flat naming scheme or a hierarchical naming scheme.

A fifth aspect of the present invention provides an information object IO obtaining method, including:
receiving, by a third ICN node, an IO request message sent by a preceding node, where the IO request message carries an identifier of an IO and attribute requirement information of user equipment;
if the third ICN node does not store an IO corresponding to the identifier of the IO, or the third ICN node stores an IO corresponding to the identifier of the IO but an attribute of the IO does not match the attribute requirement information, forwarding, by the third ICN node, the IO request message to a fourth ICN node;
receiving, by the third ICN node, an IO that matches the attribute requirement information, corresponds to the identifier of the IO, and is forwarded by the fourth ICN node; and
sending, by the third ICN node, the IO that matches the attribute requirement information and corresponds to the identifier of the IO to the preceding node.

In a first possible implementation manner of the fifth aspect, the preceding node is the user equipment or an ICN node.

In a second possible implementation manner of the fifth aspect, the attribute requirement information includes at least one of the following: publisher information of the IO, publishing time of the IO, a validity period of the IO, processing permission of the IO, or a version of the IO.

In a third possible implementation manner of the fifth aspect, the IO request message may be named by using a flat naming scheme or a hierarchical naming scheme.

A sixth aspect of the present invention provides a name resolution server NRS, including:
a receiving module, configured to receive an information object IO request message sent by user equipment, where the IO request message carries an identifier of an IO; and
a sending module, configured to send, according to the identifier of the IO that is received by the receiving module, information about a node storing the IO and attribute information of the IO stored in the node to the user equipment.

In a first possible implementation manner of the sixth aspect, the attribute information includes at least one of the following: publisher information of the IO, publishing time of the IO, a validity period of the IO, processing permission of the IO, or a version of the IO.

With reference to the sixth aspect or the first possible implementation manner of the sixth aspect, in a second possible implementation manner of the sixth aspect, the sending module is specifically configured to send an IO reply message to the user equipment, the IO reply message carries metadata, and the metadata includes the information about the node for the IO and the stored attribute information of the IO.

A seventh aspect of the present invention provides user equipment, including:
a sending module, configured to send an information object IO request message to a name resolution server NRS, where the IO request message carries an identifier of an IO;
a receiving module, configured to receive information about a node storing the IO and attribute information of the IO stored in the node that are sent by the NRS; and
a determining module, configured to determine a target node according to the attribute information of the IO stored in the node and an attribute requirement of the user equipment, and request the target node for the IO.

In a first possible implementation manner of the seventh aspect, the attribute information includes at least one of the following: publisher information of the IO, publishing time of the IO, a validity period of the IO, processing permission of the IO, or a version of the IO.

With reference to the seventh aspect or the first possible implementation manner of the seventh aspect, in a second possible implementation manner of the seventh aspect, the receiving module is specifically configured to receive an IO reply message sent by the NRS, the IO reply message carries metadata, and the metadata includes the information about the node for the IO and the stored attribute information of the IO.

An eighth aspect of the present invention provides user equipment, including:
a sending module, configured to send an information object IO request message to a first information-centric networking ICN node, where the IO request message carries an identifier of an IO and attribute requirement information of the user equipment; and
a receiving module, configured to receive an IO that matches the attribute requirement information, corresponds to the identifier of the IO, and is sent by the first ICN node.

In a first possible implementation manner of the eighth aspect, the attribute requirement information includes at least one of the following: publisher information of the IO, publishing time of the IO, a validity period of the IO, processing permission of the IO, or a version of the IO.

With reference to the eighth aspect or the first possible implementation manner of the eighth aspect, in a second possible implementation manner of the eighth aspect, the IO request message may be named by using a flat naming scheme or a hierarchical naming scheme.

A ninth aspect of the present invention provides an information-centric networking ICN node, including:
a receiving module, configured to receive an IO request message sent by a preceding node, where the IO request message carries an identifier of an IO and attribute requirement information of user equipment; and
a sending module, configured to: if a second ICN node stores an IO corresponding to the identifier of the IO and an attribute of the IO matches the attribute requirement information, send the corresponding stored IO to the preceding node.

In a first possible implementation manner of the ninth aspect, the preceding node is the user equipment or an ICN node.

In a second possible implementation manner of the ninth aspect, the attribute requirement information includes at least one of the following: publisher information of the IO, publishing time of the IO, a validity period of the IO, processing permission of the IO, or a version of the IO.

In a third possible implementation manner of the ninth aspect, the IO request message may be named by using a flat naming scheme or a hierarchical naming scheme.

A tenth aspect of the present invention provides an information-centric networking ICN node, including:
a first receiving module, configured to receive an IO request message sent by a preceding node, where the IO request message carries an identifier of an IO and attribute requirement information of user equipment;
a first sending module, configured to: if a third ICN node does not store an IO corresponding to the identifier of the IO, or the third ICN node stores an IO corresponding to the identifier of the IO but an attribute of the IO does not match the attribute requirement information, forward the IO request message to a fourth ICN node;
a second receiving module, configured to receive an IO that matches the attribute requirement information, corresponds to the identifier of the IO, and is forwarded by the fourth ICN node; and
a second sending module, configured to send the IO that matches the attribute requirement information and corresponds to the identifier of the IO to the preceding node.

In a first possible implementation manner of the tenth aspect, the preceding node is the user equipment or an ICN node.

In a second possible implementation manner of the tenth aspect, the attribute requirement information includes at least one of the following: publisher information of the IO, publishing time of the IO, a validity period of the IO, processing permission of the IO, or a version of the IO.

In a third possible implementation manner of the tenth aspect, the IO request message may be named by using a flat naming scheme or a hierarchical naming scheme.

An eleventh aspect of the present invention provides a name resolution server NRS, including:
a receiver, configured to receive an information object IO request message sent by user equipment, where the IO request message carries an identifier of an IO; and
a transmitter, configured to send, according to the identifier of the IO, information about a node storing the IO and attribute information of the IO stored in the node to the user equipment.

In a first possible implementation manner of the eleventh aspect, the attribute information includes at least one of the following: publisher information of the IO, publishing time of the IO, a validity period of the IO, processing permission of the IO, or a version of the IO.

With reference to the eleventh aspect or the first possible implementation manner of the eleventh aspect, in a second possible implementation manner of the eleventh aspect, the transmitter is specifically configured to send an IO reply message to the user equipment, the IO reply message carries metadata, and the metadata includes the information about the node for the IO and the stored attribute information of the IO.

A twelfth aspect of the present invention provides user equipment, including:
a transmitter, configured to send an information object IO request message to a name resolution server NRS, where the IO request message carries an identifier of an IO;
a receiver, configured to receive information about a node storing the IO and attribute information of the IO stored in the node that are sent by the NRS; and
a processor, configured to determine a target node according to the attribute information of the IO stored in the node and an attribute requirement of the user equipment, and request the target node for the IO.

In a first possible implementation manner of the twelfth aspect, the attribute information includes at least one of the following: publisher information of the IO, publishing time of the IO, a validity period of the IO, processing permission of the IO, or a version of the IO.

With reference to the twelfth aspect or the first possible implementation manner of the twelfth aspect, in a second possible implementation manner of the twelfth aspect, the receiver is specifically configured to receive an IO reply message sent by the NRS, the IO reply message carries metadata, and the metadata includes the information about the node for the IO and the stored attribute information of the IO.

A thirteenth aspect of the present invention provides user equipment, including:
a transmitter, configured to send an information object IO request message to a first information-centric networking ICN node, where the IO request message carries an identifier of an IO and attribute requirement information of the user equipment; and
a receiver, configured to receive an IO that matches the attribute requirement information, corresponds to the identifier of the IO, and is sent by the first ICN node.

In a first possible implementation manner of the thirteenth aspect, the attribute requirement information includes at least one of the following: publisher information of the IO, publishing time of the IO, a validity period of the IO, processing permission of the IO, or a version of the IO.

With reference to the thirteenth aspect or the first possible implementation manner of the thirteenth aspect, in a second possible implementation manner of the thirteenth aspect, the IO request message may be named by using a flat naming scheme or a hierarchical naming scheme.

A fourteenth aspect of the present invention provides an information-centric networking ICN node, including:
a receiver, configured to receive an IO request message sent by a preceding node, where the IO request message carries an identifier of an IO and attribute requirement information of user equipment; and
a transmitter, configured to: if a second ICN node stores an IO corresponding to the identifier of the IO and an attribute of the IO matches the attribute requirement information, send, by the second ICN node, the corresponding stored IO to the preceding node.

In a first possible implementation manner of the fourteenth aspect, the preceding node is the user equipment or an ICN node.

In a second possible implementation manner of the fourteenth aspect, the attribute requirement information includes at least one of the following: publisher information of the IO, publishing time of the IO, a validity period of the IO, processing permission of the IO, or a version of the IO.

In a third possible implementation manner of the fourteenth aspect, the IO request message may be named by using a flat naming scheme or a hierarchical naming scheme.

A fifteenth aspect of the present invention provides an information-centric networking ICN node, including:
a receiver, configured to receive an IO request message sent by a preceding node, where the IO request message carries an identifier of an IO and attribute requirement information of user equipment; and
a transmitter, configured to: if a third ICN node does not store an IO corresponding to the identifier of the IO, or the third ICN node stores an IO corresponding to the identifier of the IO but an attribute of the IO does not match the attribute requirement information, forward, by the first transmitter, the IO request message to a fourth ICN node; where
the receiver is further configured to receive an IO that matches the attribute requirement information, corresponds to the identifier of the IO, and is forwarded by the fourth ICN node; and
the transmitter is further configured to send the IO that matches the attribute requirement information and corresponds to the identifier of the IO to the preceding node.

In a first possible implementation manner of the fifteenth aspect, the preceding node is the user equipment or an ICN node.

In a second possible implementation manner of the fifteenth aspect, the attribute requirement information includes at least one of the following: publisher information of the IO, publishing time of the IO, a validity period of the IO, processing permission of the IO, or a version of the IO.

In a third possible implementation manner of the fifteenth aspect, the IO request message may be named by using a flat naming scheme or a hierarchical naming scheme.

According to the information object obtaining method, the server, and the user equipment that are provided in the embodiments of the present invention, a name resolution server NRS receives an information object IO request message sent by the user equipment, where the request message carries an identifier of an IO; the NRS sends, according to the identifier of the IO, information about a node storing the IO and attribute information of the IO stored in the node to the user equipment, so that the user equipment can request, according to the attribute information of the IO, the IO from a node that meets an attribute requirement of the user equipment, and a user requirement can be better met.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of an information object IO obtaining method according to an embodiment of the present invention;
FIG. 2 is a structural diagram of metadata of a document IO according to an embodiment of the present invention;
FIG. 3 is a structural diagram of metadata of a video IO according to an embodiment of the present invention;
FIG. 4 is a flowchart of an information object IO obtaining method according to an embodiment of the present invention;
FIG. 5 is a flowchart of an information object IO obtaining method according to an embodiment of the present invention;
FIG. 6 is a flowchart of an information object obtaining method according to an embodiment of the present invention;
FIG. 7 is a flowchart of an information object obtaining method according to an embodiment of the present invention;
FIG. 8 is a schematic structural diagram of a name resolution server NRS according to an embodiment of the present invention;
FIG. 9 is a schematic structural diagram of user equipment according to an embodiment of the present invention;
FIG. 10 is a schematic structural diagram of user equipment according to an embodiment of the present invention;
FIG. 11 is a schematic structural diagram of an information network node ICN according to an embodiment of the present invention;
FIG. 12 is a schematic structural diagram of an information network node ICN according to another embodiment of the present invention;
FIG. 13 is a schematic structural diagram of a name resolution server NRS according to an embodiment of the present invention;
FIG. 14 is a schematic structural diagram of user equipment according to an embodiment of the present invention;
FIG. 15 is a schematic structural diagram of user equipment according to an embodiment of the present invention;
FIG. 16 is a schematic structural diagram of an information network node ICN according to an embodiment of the present invention; and
FIG. 17 is a schematic structural diagram of an information network node ICN according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

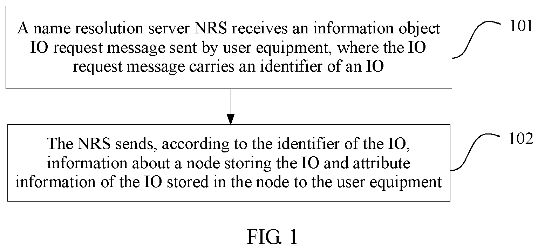

FIG. 1 is a flowchart of an information object IO obtaining method according to an embodiment of the present invention. As shown in FIG. 1, the method in this embodiment may include:
Step 101: A name resolution server NRS receives an information object IO request message sent by user equipment, where the IO request message carries an identifier of an IO.

Specifically, the NRS receives the IO request message sent by the user equipment, where the IO request message carries the identifier of the IO required by a user, that is, the IO request message carries a name of the IO required by the user.

The IO request message may further include attribute information of the information object IO (for example, a byte size, a version, and processing permission), publishing information of the IO (for example, publisher information such as a YouTube website or a Google website, and publishing time), and the like.

Step 102: The NRS sends, according to the identifier of the IO, information about a node storing the IO and attribute information of the IO stored in the node to the user equipment.

Specifically, the NRS searches locally, according to the identifier of the IO in the received IO request message, for the information about the node for the IO and the attribute information of the IO, where the IO is corresponding to the identifier of the IO required by the user equipment; and sends the found information about the node for the IO and the found attribute information of the IO to the user equipment.

Optionally, the attribute information includes at least one of the following: publisher information of the IO, publishing time of the IO, a validity period of the IO, processing permission of the IO, or a version of the IO.

The publisher information of the IO may be specifically all information about a publisher who publishes the IO. For example, if the IO is a video information object, the publisher information of the IO may be Youku, Sohu, Tudou, or the like.

The publishing time of the IO may be specifically time when the publisher publishes the IO, and different publishers may publish the same IO at the same time or at different time.

The validity period of the IO may be specifically a period for using the IO, and a user may select an IO whose period is closest to a requirement of the user.

The processing permission of the IO may be specifically processing that the publisher allows the user to perform on the IO.

For example, when the IO is a video information object, the processing permission of the IO may be allowing the user equipment to transcode, not allowing the user equipment to transcode, allowing the user equipment to cache, not allowing the user equipment to cache, or the like.

When the IO is a document information object, the processing permission of the IO may be whether to allow the user equipment to print the document, whether to allow the user equipment to copy the document, whether to allow the user equipment to change the document, whether to allow the user equipment to cache the document, or the like.

The version of the IO, for example, when the IO is a document information object, the version of the IO may be a Word version, a PDF version, or the like.

Optionally, the sending, by the NRS, information about a node storing the IO and attribute information of the IO stored in the node to the user equipment may be specifically:
sending, by the NRS, an IO reply message to the user equipment, where the IO reply message carries metadata, and the metadata includes the information about the node for the IO and the stored attribute information of the IO.

Specifically, the NRS first searches locally, according to the identifier of the IO in the received IO request message, for the information about the node for the IO and the attribute information of the IO, where the IO is corresponding to the identifier of the IO required by the user equipment; and then sends the IO reply message to the user equipment, where the reply message carries metadata, and the metadata includes the information about the node for the IO and the stored attribute information of the IO.

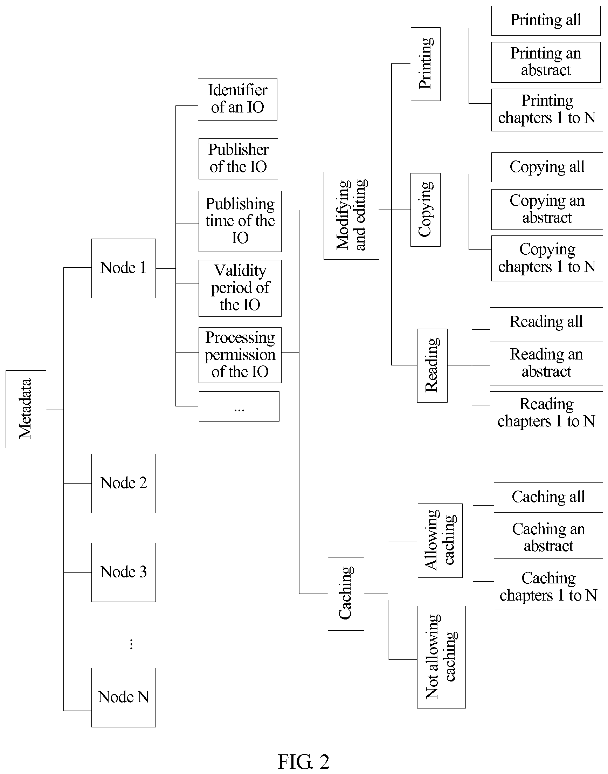

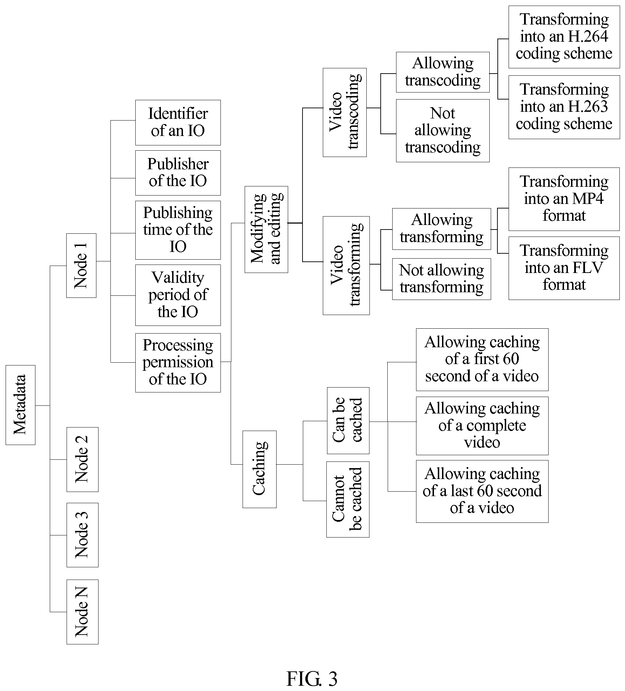

A schematic structural diagram of the metadata is shown in FIG. 2 and FIG. 3. FIG. 2 shows metadata of a document information object IO, where the metadata includes an identifier of the IO, a publisher of the IO, publishing time of the IO, a validity period of the IO, and processing permission of the IO. The processing permission of the IO includes permission to modify and process the IO, and permission to cache the IO. The permission to modify and process the IO may be specifically permission to print the IO, permission to copy the IO, and permission to read the IO, and the permission to modify and process the IO may be specified to permission to modify and process a specific part of the document. The permission to cache the IO may be specifically allowing caching or not allowing caching, and if caching the IO is allowed, similarly, a specific part of the document that is allowed to cache may be specified.

FIG. 3 shows metadata of a video information object IO, where the metadata includes an identifier of the IO, a publisher of the IO, publishing time of the IO, a validity period of the IO, and processing permission of the IO. The processing permission of the IO includes permission to modify and process the IO, and permission to cache the IO. The permission to modify and process the IO may be specifically whether performing a transcoding operation on the IO is allowed, and the permission to modify and process the IO may be specified to transcoding or format conversion of a video, for example, transforming a coding scheme from H.263 to H.264, or transforming a video format from FLV to MP4. Processing the permission to cache the IO may be specifically allowing caching or not allowing caching, and if caching the IO is allowed, similarly, a specific bit rate version or a video part of the video that is allowed to cache may be specified.

According to the information object obtaining method provided in this embodiment of the present invention, a name resolution server NRS receives an information object IO request message sent by user equipment, where the request message carries an identifier of an IO; the NRS sends, according to the identifier of the IO, information about a node storing the IO and attribute information of the IO stored in the node to the user equipment, so that the user equipment can request, according to the attribute information of the IO, the IO from a node that meets an attribute requirement of the user equipment, and a user requirement can be better met.

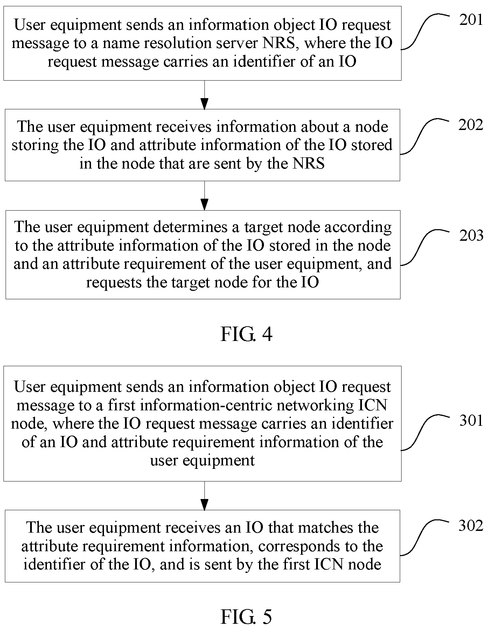

FIG. 4 is a flowchart of an information object IO obtaining method according to an embodiment of the present invention. As shown in FIG. 4, the method in this embodiment may include:
Step 201: User equipment sends an information object IO request message to a name resolution server NRS, where the IO request message carries an identifier of an IO.

Specifically, the user equipment adds the identifier of the required IO to the IO request message, and sends the IO request message to the NRS.

The IO request message may further carry attribute information of the information object IO (for example, a byte size, a version, and processing permission), publishing information of the IO (for example, publisher information such as a YouTube website or a Google website, and publishing time), and the like.

Step 202: The user equipment receives information about a node storing the IO and attribute information of the IO stored in the node that are sent by the NRS.

Specifically, the user equipment adds the identifier of the required IO to the IO request message, and sends the IO request message to the NRS, so that the NRS may search locally for the information about the node for the IO and the attribute information of the IO stored in the node, where the IO is corresponding to the identifier of the IO required by the user equipment, and send the found information about the node for the IO and the found attribute information of the IO stored in the node to the user equipment. Then the user equipment receives the information about the node storing the IO and the attribute information of the IO stored in the node that are sent by the NRS.

Optionally, the attribute information includes at least one of the following: publisher information of the IO, publishing time of the IO, a validity period of the IO, processing permission of the IO, or a version of the IO.

The publisher information of the IO may be specifically all information about a publisher who publishes the IO. For example, if the IO is a video information object, the publisher information of the IO may be Youku, Sohu, Tudou, or the like.

The publishing time of the IO may be specifically time when the publisher publishes the IO, and different publishers may publish the same IO at the same time or at different time.

The validity period of the IO may be specifically a period for using the IO, and a user may select an IO whose period is closest to a requirement of the user.

The processing permission of the IO may be specifically processing that the publisher allows the user to perform on the IO.

For example, when the IO is a video information object, the processing permission of the IO may be allowing the user equipment to transcode, not allowing the user equipment to transcode, allowing the user equipment to cache, not allowing the user equipment to cache, or the like.

When the IO is a document information object, the processing permission of the IO may be whether to allow the user equipment to print the document, whether to allow the user equipment to copy the document, whether to allow the user equipment to change the document, whether to allow the user equipment to cache the document, or the like.

The version of the IO, for example, when the IO is a document information object, the version of the IO may be a Word version, a PDF version, or the like.

Optionally, the receiving, by the user equipment, information about a node storing the IO and attribute information of the IO stored in the node that are sent by the NRS may be specifically:
receiving, by the user equipment, an IO reply message sent by the NRS, where the IO reply message carries metadata, and the metadata includes the information about the node for the IO and the stored attribute information of the IO.

Specifically, first, the user equipment adds the identifier of the required IO to the IO request message, and sends the IO request message to the NRS; then the user equipment receives the IO reply message back from the NRS, where the IO reply message carries the metadata, and the metadata includes the information about the node for the IO and the stored attribute information of the IO.

Further, a schematic structural diagram of the metadata is shown in FIG. 2 and FIG. 3.

FIG. 2 shows metadata of a document information object IO, where the metadata includes an identifier of the IO, a publisher of the IO, publishing time of the IO, a validity period of the IO, and processing permission of the IO. The processing permission of the IO includes permission to modify and process the IO, and permission to cache the IO. The permission to modify and process the IO may be specifically permission to print the IO, permission to copy the IO, and permission to read the IO, and the permission to modify and process the IO may be specified to permission to modify and process a specific part of the document. The permission to cache the IO may be specifically allowing caching or not allowing caching, and if caching the IO is allowed, similarly, a specific part of the document that is allowed to cache may be specified.

FIG. 3 shows metadata of a video information object IO, where the metadata includes an identifier of the IO, a publisher of the IO, publishing time of the IO, a validity period of the IO, and processing permission of the IO. The processing permission of the IO includes permission to modify and process the IO, and permission to cache the IO. The permission to modify and process the IO may be specifically whether performing a transcoding operation on the IO is allowed, and the permission to modify and process the IO may be specified to transcoding or format conversion of a video, for example, transforming a coding scheme from H.263 to H.264, or transforming a video format from FLV to MP4. The permission to cache the IO may be specifically allowing caching or not allowing caching, and if caching the IO is allowed, similarly, a bit rate version or a video part of the video that is allowed to cache may be specified.

Step 203: The user equipment determines a target node according to the attribute information of the IO stored in the node and an attribute requirement of the user equipment, and requests the IO from the target node.

Specifically, the user equipment searches for the target node that matches the attribute requirement of the user equipment according to the information about the node for the IO and the stored attribute information of the IO that are included in the metadata, and requests, from the target node, the IO required by the user equipment.

Further, the user equipment may find multiple target nodes that each store an IO that matches the attribute requirement of the user equipment, and the user equipment may select a most appropriate target node according to other attribute requirement. For example, the user equipment may select, according to position information, a target node nearest the user equipment to request the IO; or the user equipment may select, according to load information of the target nodes, a target node with minimum load to request the IO; or the user equipment may randomly select a target node to request the IO, or the like, which is not limited in the present invention.

According to the information object obtaining method provided in this embodiment of the present invention, user equipment sends an IO request message to a name resolution server NRS, where the IO request message carries an identifier of an IO, and the user equipment determines, according to received information about a node storing the IO and received attribute information of the IO stored in the node that are sent by the NRS, a target node that meets an attribute requirement of the user equipment, and requests the IO from the target node, so that a user requirement can be better met.

FIG. 5 is a flowchart of an information object IO obtaining method according to an embodiment of the present invention. As shown in FIG. 5, the method in this embodiment may include:
Step 301: User equipment sends an information object IO request message to a first information-centric networking ICN node, where the IO request message carries an identifier of an IO and attribute requirement information of the user equipment.

Specifically, the IO request message sent by the user equipment to the first ICN node not only carries the identifier of the IO, but also needs to carry the attribute requirement information of the user equipment for the IO.

Optionally, the attribute requirement information includes at least one of the following: publisher information of the IO, publishing time of the IO, a validity period of the IO, processing permission of the IO, or a version of the IO.

Specifically, the publisher information of the IO may be specifically publisher information required by the user equipment for the IO. For example, if the IO is a video information object, a publisher of the video information object IO may be Youku, Sohu, Tudou, or the like. When the user equipment requires an IO published by Youku, content corresponding to the publisher information of the IO is Youku.

The publishing time of the IO may be specifically publishing time, required by the user equipment, when the publisher publishes the required IO. For example, publishers may publish a same IO at different time. When the publishing time required by the user equipment for the IO is specifically March 16, 2013, content corresponding to the publishing time of the IO is March 16, 2013.

The use period of the IO may be specifically a period for the user equipment to use the requested IO. For example, validity periods stored in different ICN nodes for the IO are different, and may be from February 16, 2013 to May 20, 2013, or from February 16, 2014 to May 20, 2014, and the like. When the period for the user equipment to use the requested IO is from February 26, 2013 to March 16, 2013, the IO that matches the attribute requirement information of the user equipment is an IO stored in a node whose validity period is from February 16, 2013 to May 20, 2013, and content corresponding to the use period of the IO is from February 26, 2013 to March 16, 2013.

The processing permission of the IO may be specifically processing required by the user equipment on the requested IO.

For example, when the IO is a video information object, a manner for the user equipment to process the IO may be transcoding, not transcoding, caching, not caching, or the like. When the user equipment requires an IO that can be cached, content of the processing permission of the IO is caching. Similarly, a specific bit rate version or a video part that can be cached may further be specified. For example, the content of the processing permission of the IO may further be a video version whose bit rate is 360 bps, or a first 60s part of a video.

When the IO is a document IO, a manner for the user equipment to process the IO may be whether to print the document, whether to copy the document, whether to change the document, whether to cache the document, or the like. When the user equipment requires an IO that can be printed, content of the processing permission of the IO is printing. Similarly, a chapter that can be printed may further be specified. For example, the content of the processing permission of the IO may further be printing content of a first chapter to a second chapter.

The version of the IO may be specifically a version required by the user equipment for the IO.

For example, when the IO is a document IO, the version required by the user equipment for the IO may be a Word version or a PDF version. When the user equipment requires a document in a Word version, content of the version of the IO is Word.

Further, the user equipment sends, to the first ICN node, the IO request message that carries the identifier of the IO and the attribute requirement information of the user equipment, so that the first ICN node can search locally for an IO that is same as the identifier of the IO and matches the attribute requirement information of the user equipment, and send the IO backward to the user equipment.

Step 302: The user equipment receives an IO that matches the attribute requirement information, corresponds to the identifier of the IO, and is sent by the first ICN node.

Specifically, the user equipment receives the IO that matches the attribute requirement information, corresponds to the identifier of the IO, and is found by the ICN node.

Optionally, the IO request message may be named by using a flat naming scheme or a hierarchical naming scheme.

Specifically, in one embodiment of the present invention, when content of the IO request message is named by using the flat naming scheme, the identifier of the IO is carried in a header field of the IO request message, and the attribute requirement information is carried in the header field by extending the header field of the IO request message. For example, when the user equipment requests a document IO, a file format header field is added to the header field of the request message and used to represent a document type, where the document type may be Word, PDF, or the like; or a process Permissions header field is added and used to identify processing permission, where the processing permission may be printing, caching, read-only, or the like.

Table 6 is a specific form of the IO request message sent to the first ICN node when the IO required by the user equipment is a document IO.

**Table 6 IO request message**

| **Header field** | **Content** |
|---|---|
| version: | ICNUDP/1.0 |
| msgTyp: | GET |
| uri: | name of the requested NDO |
| file format: | pdf |
| process Permissions: | copy;cache |

Vision refers to a transfer protocol type of the IO request message; msgTyp refers to a type of the IO request message; uri refers to a name of the IO requested by the user equipment; file format refers to a type of the IO requested by the user equipment; process Permission refers to processing permission of the IO requested by the user equipment.

In this embodiment, a transfer protocol of the IO request message is ICNUDP/1.0; the type of the IO request message is GET; the name of the IO requested by the user equipment is NDO; the type of the IO requested by the user equipment is PDF; and the processing permission of the IO requested by the user equipment is copying and caching.

In another embodiment of the present invention, when the hierarchical naming scheme is used, parameter information is added to a hierarchical name of the IO. For example, when the user equipment requests a document IO, a file format is added to the hierarchical name and used to represent a document type, where the document type may be Word, PDF, or the like; or process Permissions are added and used to identify processing permission, where the processing permission may be printing, caching, read-only, or the like.
Specifically: /br.uff/video/intro.avi/(identifier of an IO)<timestamp>(timestamp)/<chunk #>(another parameter in the request message)/< file format>(file format)/<process Permissions(process permission)>.

For example, when the IO requested by the user equipment is a document IO, a name of the document is paper1, time of the document is 20140401-20140601, a format of the document is doc, and processing permission of the document is modification, the IO request message sent to the first ICN may be:
/example.com/paper1/<20140401>/<20140601>/<doc>/<modify>.

According to the information object obtaining method provided in this embodiment of the present invention, user equipment sends an information object IO request message to a first information-centric networking ICN node, where the IO request message carries an identifier of an IO and attribute requirement information of the user equipment; and receives an IO that matches the attribute requirement information, corresponds to the identifier of the IO, and is sent by the first ICN node, so that a user requirement can be better met.

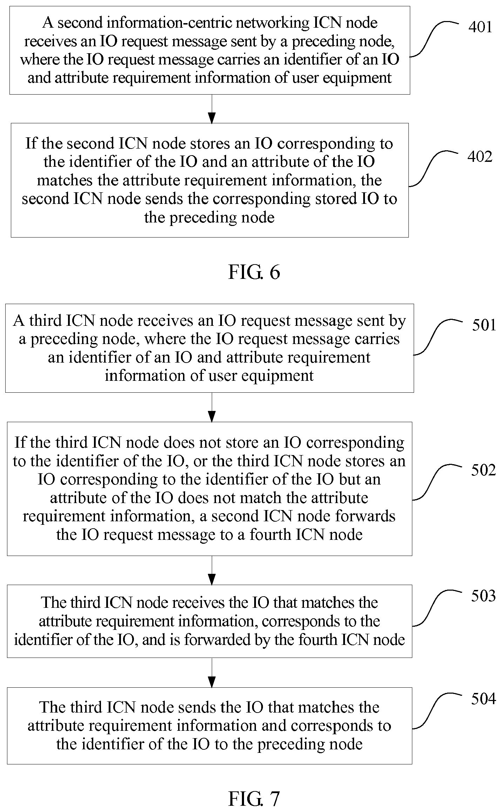

FIG. 6 is a flowchart of an information object obtaining method according to an embodiment of the present invention. As shown in FIG. 6, the method in this embodiment may include:
Step 401: A second information-centric networking ICN node receives an IO request message sent by a preceding node, where the IO request message carries an identifier of an IO and attribute requirement information of user equipment.

Specifically, the second ICN node receives the IO request message of the user equipment that is sent by the preceding node, where the IO request message carries the identifier of the IO required by the user equipment and the attribute requirement information of the user equipment.

Optionally, the preceding node is the user equipment or an ICN node.

In an embodiment of the present invention, the preceding node is the user equipment. Specifically, the user equipment sends, to the second ICN node, the IO request message that carries the identifier of the IO and the attribute requirement information of the user equipment, so that the second ICN node can search locally for an IO that is same as the identifier of the IO and matches the attribute requirement information of the user equipment, and send the IO backward to the user equipment.

In another embodiment of the present invention, the preceding node is an ICN node. Specifically, the user equipment sends, to the preceding ICN node, the IO request message that carries the identifier of the IO and the attribute requirement information of the user equipment, and the preceding ICN node does not find locally an IO that is same as the identifier of the IO, and forwards the received IO request message to the second ICN node; or the preceding ICN node finds locally an IO that is same as the identifier of the IO but stored attribute information of the IO does not match the attribute requirement information of the user equipment, and the preceding ICN node forwards the received IO request message to the second ICN node. Optionally, the attribute requirement information includes at least one of the following: publisher information of the IO, publishing time of the IO, a validity period of the IO, processing permission of the IO, or a version of the IO.

Specifically, the publisher information of the IO may be specifically publisher information required by the user equipment for the IO. For example, if the IO is a video information object, a publisher of the video information object IO may be Youku, Sohu, Tudou, or the like. When the user equipment requires an IO published by Youku, content corresponding to the publisher information of the IO is Youku.

The publishing time of the IO may be specifically publishing time, required by the user equipment, when the publisher publishes the required IO. For example, publishers may publish a same IO at different time. When the publishing time required by the user equipment for the IO is specifically March 16, 2013, content corresponding to the publishing time of the IO is March 16, 2013.

The use period of the IO may be specifically a period for the user equipment to use the requested IO. For example, validity periods stored in different ICN nodes for the IO are different, and may be from February 16, 2013 to May 20, 2013, or from February 16, 2014 to May 20, 2014, and the like. When the period for the user equipment to use the requested IO is from February 26, 2013 to March 16, 2013, the IO that matches the attribute requirement information of the user equipment is an IO stored in a node whose validity period is from February 16, 2013 to May 20, 2013, and content corresponding to the use period of the IO is from February 26, 2013 to March 16, 2013.

The processing permission of the IO may be specifically processing required by the user equipment on the requested IO.

For example, when the IO is a video information object, a manner for the user equipment to process the IO may be transcoding, not transcoding, caching, not caching, or the like. When the user equipment requires an IO that can be cached, content of the processing permission of the IO is caching. Similarly, a specific bit rate version or a video part that can be cached may further be specified. For example, the content of the processing permission of the IO may further be a video version whose bit rate is 360 bps, or a first 60s part of a video.

When the IO is a document IO, a manner for the user equipment to process the IO may be whether to print the document, whether to copy the document, whether to change the document, whether to cache the document, or the like. When the user equipment requires an IO that can be printed, content of the processing permission of the IO is printing. Similarly, a chapter that can be printed may further be specified. For example, the content of the processing permission of the IO may further be printing content of a first chapter to a second chapter.

The version of the IO may be specifically a version required by the user equipment for the IO.

For example, when the IO is a document IO, the version required by the user equipment for the IO may be a Word version or a PDF version. When the user equipment requires a document in a Word version, content of the version of the IO is Word.

Optionally, the IO request message may be named by using a flat naming scheme or a hierarchical naming scheme.

Specifically, in one embodiment of the present invention, when content of the IO request message is named by using the flat naming scheme, the identifier of the IO is carried in a header field of the IO request message, and the attribute requirement information is carried in the header field by extending the header field of the IO request message. For example, when the user equipment requests a document IO, a file format header field is added to the header field of the request message and used to represent a document type, where the document type may be Word, PDF, or the like; or a process Permissions header field is added and used to identify processing permission, where the processing permission may be printing, caching, read-only, or the like.

Table 6 is a specific form of the IO request message sent to the first ICN node when the IO required by the user equipment is a document IO:

**Table 6 IO request message**

| **Header field** | **Content** |
|---|---|
| version: | ICNUDP/1.0 |
| msgTyp: | GET |
| uri: | name of the requested NDO |
| file format: | pdf |
| process Permissions: | copy;cache |

Vision refers to a transfer protocol type of the IO request message; msgTyp refers to a type of the IO request message; uri refers to a name of the IO requested by the user equipment; file format refers to a type of the IO requested by the user equipment; process Permission refers to processing permission of the IO requested by the user equipment.

In this embodiment, a transfer protocol of the IO request message is ICNUDP/1.0; the type of the IO request message is GET; the name of the IO requested by the user equipment is NDO; the type of the IO requested by the user equipment is PDF; and the processing permission of the IO requested by the user equipment is copying and caching.

In another embodiment of the present invention, when the hierarchical naming scheme is used, parameter information is added to a hierarchical name of the IO. For example, when the user equipment requests a document IO, a file format is added to the hierarchical name and used to represent a document type, where the document type may be Word, PDF, or the like; or process Permissions are added and used to identify processing permission, where the processing permission may be printing, caching, read-only, or the like.
Specifically: /br.uff/video/intro.avi/(identifier of an IO)<timestamp>(timestamp)/<chunk #>(another parameter in the request message)/< file format>(file format)/< process Permissions(process permission)>.

For example, when the IO requested by the user equipment is a document IO, a name of the document is paper1, time of the document is 20140401-20140601, a format of the document is doc, and processing permission of the document is modification, the IO request message sent to the first ICN may be:
/example.com/paper1/<20140401>/<20140601>>/<doc>/<modify>.

Step 402: if the second ICN node stores an IO corresponding to the identifier of the IO and an attribute of the IO matches the attribute requirement information, the second ICN node sends the corresponding stored IO to the preceding node.

Specifically, after receiving the IO request message sent by the preceding node, the second ICN node searches locally for an IO that is same as the identifier of the IO and matches the attribute requirement information of the user equipment, and sends the IO backward to the user equipment.

In one embodiment of the present invention, when the preceding node is the user equipment, the second ICN node directly sends the found IO that matches the IO requested by the user equipment backward to the user equipment.

In another embodiment of the present invention, when the preceding node is an ICN node, the second ICN node sends, according to a request path, the found IO that matches the IO requested by the user equipment backward to the user equipment, that is, first, the second ICN node sends the found IO to the preceding ICN node, then the preceding ICN node sends the IO to the user equipment. When the IO found by the second ICN node is an IO in a storage ICN node designated by an IO publisher, the preceding ICN node can only forward the IO found by the second ICN node, but cannot cache the IO.

According to the information object obtaining method provided in this embodiment of the present invention, a second information-centric networking ICN node receives an IO request message sent by a preceding node, where the preceding node may be user equipment or an ICN node, the second ICN node stores an IO corresponding to an identifier of an IO and an attribute of the IO matches attribute requirement information, and the second ICN node sends the corresponding stored IO to the preceding node, so that a user requirement can be better met.

FIG. 7 is a flowchart of an information object obtaining method according to an embodiment of the present invention. As shown in FIG. 7, the method in this embodiment may include:
Step 501: A third ICN node receives an IO request message sent by a preceding node, where the IO request message carries an identifier of an IO and attribute requirement information of user equipment.

Specifically, the third ICN node receives the IO request message of the user equipment that is sent by the preceding node, where the IO request message carries the identifier of the IO required by the user equipment and the attribute requirement information of the user equipment.

Optionally, the preceding node is the user equipment or an ICN node.

In an embodiment of the present invention, the preceding node is the user equipment. Specifically, the user equipment sends, to a second ICN node, the IO request message that carries the identifier of the IO and the attribute requirement information of the user equipment, so that the second ICN node can search locally for an IO that is same as the identifier of the IO and matches the attribute requirement information of the user equipment, and send the IO backward to the user equipment.

In another embodiment of the present invention, the preceding node is an ICN node. Specifically, the user equipment sends, to the preceding ICN node, the IO request message that carries the identifier of the IO and the attribute requirement information of the user equipment, and the preceding ICN node does not find locally an IO that is same as the identifier of the IO, and forwards the received IO request message to a second ICN node; or the preceding ICN node finds locally an IO that is same as the identifier of the IO but stored attribute information of the IO does not match the attribute requirement information of the user equipment, and the preceding ICN node forwards the received IO request message to the third ICN node.

Optionally, the attribute requirement information includes at least one of the following: publisher information of the IO, publishing time of the IO, a validity period of the IO, processing permission of the IO, or a version of the IO.

Specifically, the publisher information of the IO may be specifically publisher information required by the user equipment for the IO. For example, if the IO is a video information object, a publisher of the video information object IO may be Youku, Sohu, Tudou, or the like. When the user equipment requires an IO published by Youku, content corresponding to the publisher information of the IO is Youku.

The publishing time of the IO may be specifically publishing time, required by the user equipment, when the publisher publishes the required IO. For example, publishers may publish a same IO at different time. When the publishing time required by the user equipment for the IO is specifically March 16, 2013, content corresponding to the publishing time of the IO is March 16, 2013.

The use period of the IO may be specifically a period for the user equipment to use the requested IO. For example, validity periods stored in different ICN nodes for the IO are different, and may be from February 16, 2013 to May 20, 2013, or from February 16, 2014 to May 20, 2014, and the like. When the period for the user equipment to use the requested IO is from February 26, 2013 to March 16, 2013, the IO that matches the attribute requirement information of the user equipment is an IO stored in a node whose validity period is from February 16, 2013 to May 20, 2013, and content corresponding to the use period of the IO is from February 26, 2013 to March 16, 2013.

The processing permission of the IO may be specifically processing required by the user equipment on the requested IO.

For example, when the IO is a video information object, a manner for the user equipment to process the IO may be transcoding, not transcoding, caching, not caching, or the like. When the user equipment requires an IO that can be cached, content of the processing permission of the IO is caching. Similarly, a specific bit rate version or a video part that can be cached may further be specified. For example, the content of the processing permission of the IO may further be a video version whose bit rate is 360 bps, or a first 60s part of a video.

When the IO is a document IO, a manner for the user equipment to process the IO may be whether to print the document, whether to copy the document, whether to change the document, whether to cache the document, or the like. When the user equipment requires an IO that can be printed, content of the processing permission of the IO is printing. Similarly, a chapter that can be printed may further be specified. For example, the content of the processing permission of the IO may further be printing content of a first chapter to a second chapter.

The version of the IO may be specifically a version required by the user equipment for the IO.

For example, when the IO is a document IO, the version required by the user equipment for the IO may be a Word version or a PDF version. When the user equipment requires a document in a Word version, content of the version of the IO is Word.

Optionally, the IO request message may be named by using a flat naming scheme or a hierarchical naming scheme.

Specifically, in one embodiment of the present invention, when content of the IO request message is named by using the flat naming scheme, the identifier of the IO is carried in a header field of the IO request message, and the attribute requirement information is carried in the header field by extending the header field of the IO request message. For example, when the user equipment requests a document IO, a file format header field is added to the header field of the request message and used to represent a document type, where the document type may be Word, PDF, or the like; or a process Permissions header field is added and used to identify processing permission, where the processing permission may be printing, caching, read-only, or the like.

Table 6 is a specific form of the IO request message sent to the first ICN node when the IO required by the user equipment is a document IO.

**Table 6 IO request message**

| **Header field** | **Content** |
|---|---|
| version: | ICNUDP/1.0 |
| msgTyp: | GET |
| uri: | name of the requested NDO |
| file format: | pdf |
| process Permissions: | copy;cache |

Vision refers to a transfer protocol type of the IO request message; msgTyp refers to a type of the IO request message; uri refers to a name of the IO requested by the user equipment; file format refers to a type of the IO requested by the user equipment; process Permission refers to processing permission of the IO requested by the user equipment.

In this embodiment, a transfer protocol of the IO request message is ICNUDP/1.0; the type of the IO request message is GET, the name of the IO requested by the user equipment is NDO; the type of the IO requested by the user equipment is PDF; and the processing permission of the IO requested by the user equipment is copying and caching.

In another embodiment of the present invention, when the hierarchical naming scheme is used, parameter information is added to a hierarchical name of the IO. For example, when the user equipment requests a document IO, a file format is added to the hierarchical name and used to represent a document type, where the document type may be Word, PDF, or the like; or process Permissions are added and used to identify processing permission, where the processing permission may be printing, caching, read-only, or the like.
Specifically: /br.uff/video/intro.avi/(identifier of an IO)<timestamp>(timestamp)/<chunk #>(another parameter in the request message)/< file format>(file format)/< process Permissions(process permission)>.

For example, when the IO requested by the user equipment is a document IO, a name of the document is paper1, time of the document is 20140401-20140601, a format of the document is doc, and processing permission of the document is modification, the IO request message sent to the first ICN may be:
/example.com/paper1/<20140401>/<20140601>/<doc>/<modify>.

Step 502: If the third ICN node does not store an IO corresponding to the identifier of the IO, or the third ICN node stores an IO corresponding to the identifier of the IO but an attribute of the IO does not match the attribute requirement information, a second ICN node forwards the IO request message to a fourth ICN node.

Specifically, when an IO that is same as the identifier of the IO is not found locally, the third ICN node forwards the IO request message to a next ICN node according to the received IO request message. When an IO that is same as the identifier of the IO is found locally, but when the search continues, the IO does not match the attribute requirement information of the user equipment, the third ICN node forwards the IO request message to a fourth ICN node.

Step 503: The third ICN node receives the IO that matches the attribute requirement information, corresponds to the identifier of the IO, and is forwarded by the fourth ICN node.

Specifically, the third ICN node forwards the IO request message to the fourth ICN node, so that the fourth ICN node searches locally for an IO that is same as the identifier of the IO required by the user equipment and the attribute requirement information, and sends the IO to the third ICN node.

Step 504: The third ICN node sends the IO that matches the attribute requirement information and corresponds to the identifier of the IO to the preceding node.

Specifically, after receiving the IO sent by the fourth ICN node, the third ICN node forwards the IO to the preceding node according to a request path. When the IO found by the fourth ICN node is an IO in a storage ICN node designated by an IO publisher, the third ICN node can only forward the IO found by the fourth ICN node, but cannot cache the IO.

In one embodiment of the present invention, when the preceding node is the user equipment, the third ICN node directly sends the found IO that matches the IO requested by the user equipment backward to the user equipment.

In another embodiment of the present invention, when the preceding node is an ICN node, the third ICN node sends, according to a request path, the found IO that matches the IO requested by the user equipment backward to the user equipment, that is, first, the third ICN node sends the received IO to the preceding ICN node, then the preceding ICN node sends the IO to the user equipment. When the IO found by the fourth ICN node is an IO in a storage ICN node designated by an IO publisher, the preceding ICN node can only forward the IO found by the fourth ICN node, but cannot cache the IO.

Optionally, the fourth ICN node may be the second ICN node in the foregoing embodiment.

According to the information object obtaining method provided in this embodiment of the present invention, a third ICN node receives an IO request message that carries an identifier of an IO and attribute requirement information of user equipment and is sent by a preceding node; when the third ICN node does not store an IO corresponds to the identifier of the IO or an IO corresponds to the identifier of the IO but does not match the attribute requirement information, the third ICN node forwards the IO request message to a fourth ICN node; the third ICN node receives an IO that matches the IO request message and is forwarded by the fourth ICN node, and sends the IO to the preceding node, so that the user equipment can obtain, by requesting, an IO that meets a requirement of the user equipment, and a user requirement can be better met.

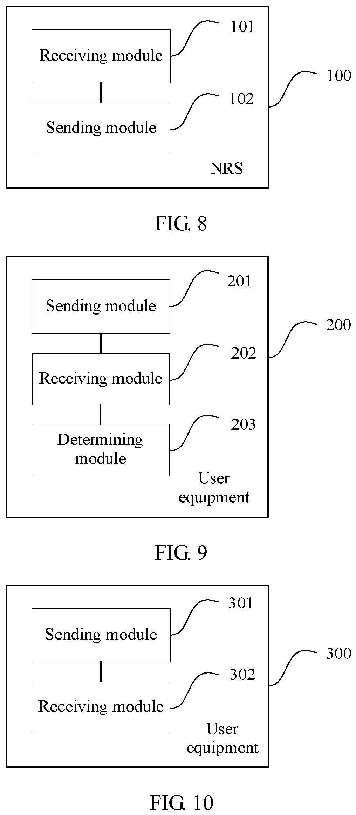

FIG. 8 is a schematic structural diagram of a name resolution server NRS according to an embodiment of the present invention. As shown in FIG. 8, an NRS 100 includes: a receiving module 101 and a sending module 102, where the receiving module 101 is configured to receive an information object IO request message sent by user equipment, the IO request message carries an identifier of an IO; and the sending module 102 is configured to send, according to the identifier of the IO that is received by the receiving module, information about a node storing in the IO and attribute information of the IO stored in the node to the user equipment. Optionally, the attribute information includes at least one of the following: publisher information of the IO, publishing time of the IO, a validity period of the IO, processing permission of the IO, or a version of the IO.

Optionally, the sending module 102 is specifically configured to send an IO reply message to the user equipment, where the IO reply message carries metadata, and the metadata includes the information about the node for the IO and the stored attribute information of the IO.

The NRS provided in this embodiment executes the information object IO obtaining method provided in the embodiments of the present invention, and may be used to execute a technical solution of the IO obtaining method shown in FIG. 1. Implementation principles and technical effects of the NRS are similar to those of the method, and details are not described herein.

FIG. 9 is a schematic structural diagram of user equipment according to an embodiment of the present invention. As shown in FIG. 9, user equipment 200 includes: a sending module 201, a receiving module 202, and a determining module 203, where the sending module 201 is configured to send an IO request message to a name resolution server NRS, where the IO request message carries an identifier of an IO; the receiving module 202 is configured to receive information about a node storing the IO and attribute information of the IO stored in the node that are sent by the NRS; and the determining module 203 is configured to determine a target node according to the attribute information of the IO stored in the node and an attribute requirement of the user equipment, and request the target node for the IO.

Optionally, the attribute information includes at least one of the following: publisher information of the IO, publishing time of the IO, a validity period of the IO, processing permission of the IO, or a version of the IO.

Optionally, the receiving module is specifically configured to receive an IO reply message sent by the NRS, where the IO reply message carries metadata, and the metadata includes the information about the node for the IO and the stored attribute information of the IO.

The user equipment provided in this embodiment executes the information object IO obtaining method provided in the embodiments of the present invention, and may be used to execute a technical solution of the IO obtaining method shown in FIG. 4. Implementation principles and technical effects of the user equipment are similar to those of the method, and details are not described herein.

FIG. 10 is a schematic structural diagram of user equipment according to an embodiment of the present invention. As shown in FIG. 10, user equipment 300 includes: a sending module 301, and a receiving module 302, where the sending module 301 is configured to send an information object IO request message to a first information-centric networking ICN node, where the IO request message carries an identifier of an IO and attribute requirement information of the user equipment; and
the receiving module 302 is configured to receive an IO that matches the attribute requirement information, corresponds to the identifier of the IO, and is sent by the first ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The user equipment provided in this embodiment executes the information object IO obtaining method provided in the embodiments of the present invention, and may be used to execute a technical solution of the IO obtaining method shown in FIG. 5. Implementation principles and technical effects of the user equipment are similar to those of the method, and details are not described herein.

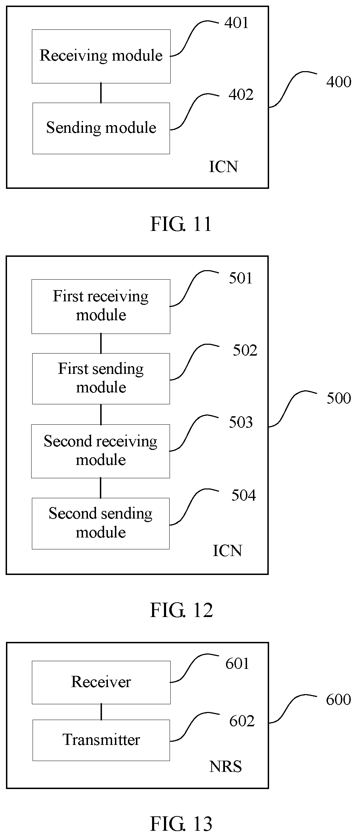

FIG. 11 is a schematic structural diagram of an information network node ICN according to an embodiment of the present invention. As shown in FIG. 11, an ICN 400 includes: a receiving module 401 and a sending module 402, where the receiving module 401 is configured to receive an IO request message sent by a preceding node, where the IO request message carries an identifier of an IO and attribute requirement information of user equipment; and
the sending module 402 is configured to: if a second ICN node stores an IO corresponding to the identifier of the IO and an attribute of the IO matches the attribute requirement information, send the corresponding stored IO to the preceding node.

Optionally, the preceding node is the user equipment or an ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The ICN provided in this embodiment executes the information object IO obtaining method according to the embodiments of the present invention, and may be used to execute a technical solution of the IO obtaining method shown in FIG. 7. Implementation principles and technical effects of the ICN are similar to those of the method, and details are not described herein.

FIG. 12 is a schematic structural diagram of an information network node ICN according to another embodiment of the present invention. As shown in FIG. 12, an ICN 500 includes: a first receiving module 501, a first sending module 502, a second receiving module 503, and a second sending module 504, where the first receiving module 501 is configured to receive an IO request message sent by a preceding node, where the IO request message carries an identifier of an IO and attribute requirement information of user equipment; the first sending module 502 is configured to: if a third ICN node does not store an IO corresponding to the identifier of the IO, or the third ICN node stores an IO corresponding to the identifier of the IO but an attribute of the IO does not match the attribute requirement information, forward the IO request message to a fourth ICN node; the second receiving module 503 is configured to receive an IO that matches the attribute requirement information, corresponds to the identifier of the IO, and is forwarded by the fourth ICN node; and the second receiving module 504 is configured to send the IO that matches the attribute requirement information and corresponds to the identifier of the IO to the preceding node.

Optionally, the preceding node is the user equipment or an ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The ICN provided in this embodiment executes the information object IO obtaining method provided in the embodiments of the present invention, and may be used to execute a technical solution of the IO obtaining method shown in FIG. 8. Implementation principles and technical effects of the ICN are similar to those of the method, and details are not described herein.

FIG. 13 is a schematic structural diagram of a name resolution server NRS according to an embodiment of the present invention. As shown in FIG. 13, an NRS 600 includes: a receiver 601 and a transmitter 602, where the receiver 601 is configured to receive an information object IO request message sent by user equipment, where the IO request message carries an identifier of an IO; and
the transmitter 602 is configured to send, according to the identifier of the IO, information about a node storing the IO and attribute information of the IO stored in the node to the user equipment.

Optionally, the attribute information includes at least one of the following: publisher information of the IO, publishing time of the IO, a validity period of the IO, processing permission of the IO, or a version of the IO.

Optionally, the transmitter 602 is specifically configured to send an IO reply message to the user equipment, where the IO reply message carries metadata, and the metadata includes the information about the node for the IO and the stored attribute information of the IO.

The NRS provided in this embodiment executes the information object IO obtaining method provided in the embodiments of the present invention, and may be used to execute a technical solution of the IO obtaining method shown in FIG. 1. Implementation principles and technical effects of the NRS are similar to those of the method, and details are not described herein.

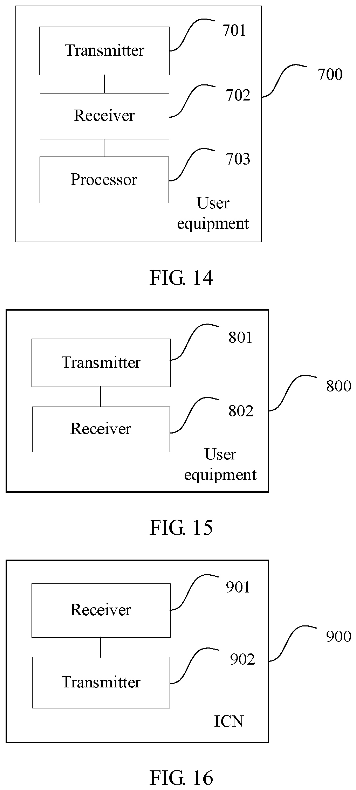

FIG. 14 is a schematic structural diagram of user equipment according to an embodiment of the present invention. As shown in FIG. 14, user equipment 700 includes: a transmitter 701, a receiver 702, and a processor 703, where the transmitter 701 is configured to send an information object IO request message to a name resolution server NRS, where the IO request message carries an identifier of an IO;
the receiver 702 is configured to receive information about a node storing the IO and attribute information of the IO stored in the node that are sent by the NRS; and
the processor 703 is configured to determine a target node according to the attribute information of the IO stored in the node and an attribute requirement of the user equipment, and request the target node for the IO.

Optionally, the attribute information includes at least one of the following: publisher information of the IO, publishing time of the IO, a validity period of the IO, processing permission of the IO, or a version of the IO.

Optionally, the receiver 702 is specifically configured to receive an IO reply message sent by the NRS, where the IO reply message carries metadata, and the metadata includes the information about the node for the IO and the stored attribute information of the IO.

The user equipment provided in this embodiment executes the information object IO obtaining method provided in the embodiments of the present invention, and may be used to execute a technical solution of the IO obtaining method shown in FIG. 4. Implementation principles and technical effects of the user equipment are similar to those of the method, and details are not described herein.

FIG. 15 is a schematic structural diagram of user equipment according to an embodiment of the present invention. As shown in FIG. 15, user equipment 800 includes: a transmitter 801 and a receiver 802, where the transmitter 801 is configured to send an information object IO request message to a first information-centric networking ICN node, where the IO request message carries an identifier of an IO and attribute requirement information of the user equipment; and the receiver 802 is configured to receive an IO that matches the attribute requirement information, corresponds to the identifier of the IO, and is sent by the first ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The user equipment provided in this embodiment executes the information object IO obtaining method provided in the embodiments of the present invention, and may be used to execute a technical solution of the IO obtaining method shown in FIG. 4. Implementation principles and technical effects of the user equipment are similar to those of the method, and details are not described herein.

FIG. 16 is a schematic structural diagram of an information network node ICN according to an embodiment of the present invention. As shown in FIG. 16, an ICN 900 includes: a receiver 901 and a transmitter 902, where the receiver 901 is configured to receive an IO request message sent by a preceding node, where the IO request message carries an identifier of an IO and attribute requirement information of user equipment; and the transmitter 902 is configured to: if a second ICN node stores an IO corresponds to the identifier of the IO and an attribute of the IO matches the attribute requirement information, send, by the second ICN node, the corresponding stored IO to the preceding node.

Optionally, the preceding node is the user equipment or an ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The ICN provided in this embodiment executes the information object IO obtaining method according to the embodiments of the present invention, and may be used to execute a technical solution of the IO obtaining method shown in FIG. 7. Implementation principles and technical effects of the ICN are similar to those of the method, and details are not described herein.

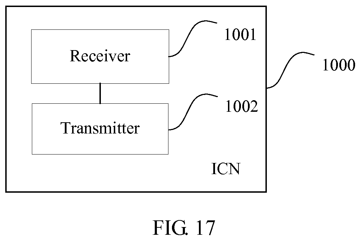

FIG. 17 is a schematic structural diagram of an information network node ICN according to an embodiment of the present invention. As shown in FIG. 17, an ICN 1000 includes: a receiver 1001 and a transmitter 1002, where the receiver 1001 is configured to receive an IO request message sent by a preceding node, where the IO request message carries an identifier of an IO and attribute requirement information of user equipment; and the transmitter 1002 is configured to: if a third ICN node does not store an IO corresponding to the identifier of the IO, or the third ICN node stores an IO corresponds to the identifier of the IO but an attribute of the IO does not match the attribute requirement information, forward, by the first transmitter, the IO request message to a fourth ICN node; the receiver 1001 is further configured to receive an IO that matches the attribute requirement information, corresponds to the identifier of the IO, and is forwarded by the fourth ICN node; and the transmitter 1002 is configured to send the IO that matches the attribute requirement information and corresponds to the identifier of the IO to the preceding node.

Optionally, the preceding node is the user equipment or an ICN node.

Optionally, the attribute requirement information includes at least one of the following: publisher information of the IO, publishing time of the IO, a validity period of the IO, processing permission of the IO, or a version of the IO.

Optionally, the IO request message may be named by using a flat naming scheme or a hierarchical naming scheme.

The ICN provided in this embodiment executes the information object IO obtaining method provided in the embodiments of the present invention, and may be used to execute a technical solution of the IO obtaining method shown in FIG. 8. Implementation principles and technical effects of the ICN are similar to those of the method, and details are not described herein.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An information object IO obtaining method, comprising:
receiving, by a name resolution server NRS, an information object IO request message sent by user equipment, wherein the IO request message carries an identifier of an IO; and
sending, by the NRS according to the identifier of the IO, information about a node storing the IO and attribute information of the IO stored in the node to the user equipment.

2. The method according to claim 1, wherein the attribute information comprises at least one of the following: publisher information of the IO, publishing time of the IO, a validity period of the IO, processing permission of the IO, or a version of the IO.

3. The method according to claim 1 or 2, wherein the sending, by the NRS, information about a node storing the IO and attribute information of the IO stored in the node to the user equipment specifically comprises:
sending, by the NRS, an IO reply message to the user equipment, wherein the IO reply message carries metadata, and the metadata comprises the information about the node for the IO and the stored attribute information of the IO.

4. An information object IO obtaining method, comprising:
sending, by user equipment, an information object IO request message to a name resolution server NRS, wherein the IO request message carries an identifier of an IO;
receiving, by the user equipment, information about a node storing the IO and attribute information of the IO stored in the node that are sent by the NRS; and
determining, by the user equipment, a target node according to the attribute information of the IO stored in the node and an attribute requirement of the user equipment, and requesting the target node for the IO.

5. The method according to claim 4, wherein the attribute information comprises at least one of the following: publisher information of the IO, publishing time of the IO, a validity period of the IO, processing permission of the IO, or a version of the IO.

6. The method according to claim 4 or 5, wherein the receiving, by the user equipment, information about a node storing the IO and attribute information of the IO stored in the node that are sent by the NRS specifically comprises:
receiving, by the user equipment, an IO reply message sent by the NRS, wherein the IO reply message carries metadata, and the metadata comprises the information about the node for the IO and the stored attribute information of the IO.

7. An information object IO obtaining method, comprising:
sending, by user equipment, an information object IO request message to a first information-centric networking ICN node, wherein the IO request message carries an identifier of an IO and attribute requirement information of the user equipment; and
receiving, by the user equipment, an IO that matches the attribute requirement information, corresponds to the identifier of the IO, and is sent by the first ICN node.

8. The method according to claim 7, wherein the attribute requirement information comprises at least one of the following: publisher information of the IO, publishing time of the IO, a validity period of the IO, processing permission of the IO, or a version of the IO.

9. The method according to claim 7 or 8, wherein the IO request message may be named by using a flat naming scheme or a hierarchical naming scheme.

10. An information object IO obtaining method, comprising:
receiving, by a second information-centric networking ICN node, an IO request message sent by a preceding node, wherein the IO request message carries an identifier of an IO and attribute requirement information of user equipment; and
if the second ICN node stores an IO corresponding to the identifier of the IO and an attribute of the IO matches the attribute requirement information, sending, by the second ICN node, the corresponding stored IO to the preceding node.

11. The method according to claim 10, wherein the preceding node is the user equipment or an ICN node.

12. The method according to claim 10, wherein the attribute requirement information comprises at least one of the following: publisher information of the IO, publishing time of the IO, a validity period of the IO, processing permission of the IO, or a version of the IO.

13. The method according to claim 10, wherein the IO request message may be named by using a flat naming scheme or a hierarchical naming scheme.

14. An information object IO obtaining method, comprising:
receiving, by a third ICN node, an IO request message sent by a preceding node, wherein the IO request message carries an identifier of an IO and attribute requirement information of user equipment;
if the third ICN node does not store an IO corresponding to the identifier of the IO, or the third ICN node stores an IO corresponding to the identifier of the IO but an attribute of the IO does not match the attribute requirement information, forwarding, by the third ICN node, the IO request message to a fourth ICN node;
receiving, by the third ICN node, an IO that matches the attribute requirement information, corresponds to the identifier of the IO, and is forwarded by the fourth ICN node; and
sending, by the third ICN node, the IO that matches the attribute requirement information and corresponds to the identifier of the IO to the preceding node.

15. The method according to claim 14, wherein the preceding node is the user equipment or an ICN node.

16. The method according to claim 14, wherein the attribute requirement information comprises at least one of the following: publisher information of the IO, publishing time of the IO, a validity period of the IO, processing permission of the IO, or a version of the IO.

17. The method according to claim 14, wherein the IO request message may be named by using a flat naming scheme or a hierarchical naming scheme.

18. A name resolution server NRS, comprising:
a receiving module, configured to receive an information object IO request message sent by user equipment, wherein the IO request message carries an identifier of an IO; and
a sending module, configured to send, according to the identifier of the IO that is received by the receiving module, information about a node storing the IO and attribute information of the IO stored in the node to the user equipment.

19. The NRS according to claim 18, wherein the attribute information comprises at least one of the following: publisher information of the IO, publishing time of the IO, a validity period of the IO, processing permission of the IO, or a version of the IO.

20. The NRS according to claim 18 or 19, wherein the sending module is specifically configured to send an IO reply message to the user equipment, the IO reply message carries metadata, and the metadata comprises the information about the node for the IO and the stored attribute information of the IO.

21. User equipment, comprising:
a sending module, configured to send an information object IO request message to a name resolution server NRS, wherein the IO request message carries an identifier of an IO;
a receiving module, configured to receive information about a node storing the IO and attribute information of the IO stored in the node that are sent by the NRS; and
a determining module, configured to determine a target node according to the attribute information of the IO stored in the node and an attribute requirement of the user equipment, and request the target node for the IO.

22. The user equipment according to claim 21, wherein the attribute information comprises at least one of the following: publisher information of the IO, publishing time of the IO, a validity period of the IO, processing permission of the IO, or a version of the IO.

23. The user equipment according to claim 21 or 22, wherein the receiving module is specifically configured to receive an IO reply message sent by the NRS, the IO reply message carries metadata, and the metadata comprises the information about the node for the IO and the stored attribute information of the IO.

24. User equipment, comprising:
a sending module, configured to send an information object IO request message to a first information-centric networking ICN node, wherein the IO request message carries an identifier of an IO and attribute requirement information of the user equipment; and
a receiving module, configured to receive an IO that matches the attribute requirement information, corresponds to the identifier of the IO, and is sent by the first ICN node.

25. The user equipment according to claim 24, wherein the attribute requirement information comprises at least one of the following: publisher information of the IO, publishing time of the IO, a validity period of the IO, processing permission of the IO, or a version of the IO.

26. The method according to claim 24 or 25, wherein the IO request message may be named by using a flat naming scheme or a hierarchical naming scheme.

27. An information-centric networking ICN node, comprising:
a receiving module, configured to receive an IO request message sent by a preceding node, wherein the IO request message carries an identifier of an IO and attribute requirement information of user equipment; and
a sending module, configured to: if a second ICN node stores an IO corresponding to the identifier of the IO and an attribute of the IO matches the attribute requirement information, send the corresponding stored IO to the preceding node.

28. The ICN node according to claim 27, wherein the preceding node is the user equipment or an ICN node.

29. The ICN node according to claim 27, wherein the attribute requirement information comprises at least one of the following: publisher information of the IO, publishing time of the IO, a validity period of the IO, processing permission of the IO, or a version of the IO.

30. The ICN node according to claim 27, wherein the IO request message may be named by using a flat naming scheme or a hierarchical naming scheme.

31. An information-centric networking ICN node, comprising:
a first receiving module, configured to receive an IO request message sent by a preceding node, wherein the IO request message carries an identifier of an IO and attribute requirement information of user equipment;
a first sending module, configured to: if a third ICN node does not store an IO corresponding to the identifier of the IO, or the third ICN node stores an IO corresponding to the identifier of the IO but an attribute of the IO does not match the attribute requirement information, forward the IO request message to a fourth ICN node;
a second receiving module, configured to receive an IO that matches the attribute requirement information, corresponds to the identifier of the IO, and is forwarded by the fourth ICN node; and
a second sending module, configured to send the IO that matches the attribute requirement information and corresponds to the identifier of the IO to the preceding node.

32. The ICN node according to claim 31, wherein the preceding node is the user equipment or an ICN node.

33. The ICN node according to claim 31, wherein the attribute requirement information comprises at least one of the following: publisher information of the IO, publishing time of the IO, a validity period of the IO, processing permission of the IO, or a version of the IO.

34. The ICN node according to claim 31, wherein the IO request message may be named by using a flat naming scheme or a hierarchical naming scheme.

35. A name resolution server NRS, comprising:
a receiver, configured to receive an information object IO request message sent by user equipment, wherein the IO request message carries an identifier of an IO; and
a transmitter, configured to send, according to the identifier of the IO, information about a node storing the IO and attribute information of the IO stored in the node to the user equipment.

36. The NRS according to claim 35, wherein the attribute information comprises at least one of the following: publisher information of the IO, publishing time of the IO, a validity period of the IO, processing permission of the IO, or a version of the IO.

37. The NRS according to claim 35 or 36, wherein the transmitter is specifically configured to send an IO reply message to the user equipment, the IO reply message carries metadata, and the metadata comprises the information about the node for the IO and the stored attribute information of the IO.

38. User equipment, comprising:
a transmitter, configured to send an information object IO request message to a name resolution server NRS, wherein the IO request message carries an identifier of an IO;
a receiver, configured to receive information about a node storing the IO and attribute information of the IO stored in the node that are sent by the NRS; and
a processor, configured to determine a target node according to the attribute information of the IO stored in the node and an attribute requirement of the user equipment, and request the target node for the IO.

39. The user equipment according to claim 38, wherein the attribute information comprises at least one of the following: publisher information of the IO, publishing time of the IO, a validity period of the IO, processing permission of the IO, or a version of the IO.

40. The user equipment according to claim 38 or 39, wherein the receiver is specifically configured to receive an IO reply message sent by the NRS, the IO reply message carries metadata, and the metadata comprises the information about the node for the IO and the stored attribute information of the IO.

41. User equipment, comprising:
a transmitter, configured to send an information object IO request message to a first information-centric networking ICN node, wherein the IO request message carries an identifier of an IO and attribute requirement information of the user equipment; and
a receiver, configured to receive an IO that matches the attribute requirement information, corresponds to the identifier of the IO, and is sent by the first ICN node.

42. The user equipment according to claim 41, wherein the attribute requirement information comprises at least one of the following: publisher information of the IO, publishing time of the IO, a validity period of the IO, processing permission of the IO, or a version of the IO.

43. The method according to claim 41 or 42, wherein the IO request message may be named by using a flat naming scheme or a hierarchical naming scheme.

44. An information-centric networking ICN node, comprising:
a receiver, configured to receive an IO request message sent by a preceding node, wherein the IO request message carries an identifier of an IO and attribute requirement information of user equipment; and
a transmitter, configured to: if a second ICN node stores an IO corresponding to the identifier of the IO and an attribute of the IO matches the attribute requirement information, send, by the second ICN node, the corresponding stored IO to the preceding node.

45. The ICN node according to claim 44, wherein the preceding node is the user equipment or an ICN node.

46. The ICN node according to claim 44, wherein the attribute requirement information comprises at least one of the following: publisher information of the IO, publishing time of the IO, a validity period of the IO, processing permission of the IO, or a version of the IO.

47. The ICN node according to claim 44, wherein the IO request message may be named by using a flat naming scheme or a hierarchical naming scheme.

48. An information-centric networking ICN node, comprising:
a receiver, configured to receive an IO request message sent by a preceding node, wherein the IO request message carries an identifier of an IO and attribute requirement information of user equipment; and
a transmitter, configured to: if a third ICN node does not store an IO corresponding to the identifier of the IO, or the third ICN node stores an IO corresponding to the identifier of the IO but an attribute of the IO does not match the attribute requirement information, forward, by the first transmitter, the IO request message to a fourth ICN node; wherein
the receiver is further configured to receive an IO that matches the attribute requirement information, corresponds to the identifier of the IO, and is forwarded by the fourth ICN node; and
the transmitter is further configured to send the IO that matches the attribute requirement information and corresponds to the identifier of the IO to the preceding node.

49. The ICN node according to claim 48, wherein the preceding node is the user equipment or an ICN node.

50. The ICN node according to claim 48, wherein the attribute requirement information comprises at least one of the following: publisher information of the IO, publishing time of the IO, a validity period of the IO, processing permission of the IO, or a version of the IO.

51. The ICN node according to claim 48, wherein the IO request message may be named by using a flat naming scheme or a hierarchical naming scheme.
